# EUROPÄISCHE PATENTANMELDUNG

(11) **EP 0 630 802 A2**
(43) Veröffentlichungstag der Anmeldung: **28.12.1994**
(21) Anmeldenummer: 94108176.2
(22) Anmeldetag: 27.05.1994
(51) Int. Cl.: B62H 5/10

(54) **Sicherungseinrichtung für Fahrräder**

(30) Priorität: 22.06.1993 DE 4320663
(71) Anmelder: Vetterick, Hans-Jürgen, D-53859 Niederkassel (DE)
(72) Erfinder: Vetterick, Hans-Jürgen, D-53859 Niederkassel (DE); van Heugten, Henricus, NL-6006 PG Weert (NL)
(74) Vertreter: King, Hubert, Dipl.-Ing., Patentanwalt

(57) **Zusammenfassung**

Die auf einem Eingriff in die Speichen insbesondere des Hinterrades beruhenden Druckschlösser wie auch Bügel-, Schwenkbügel-, Stahlkabel- und Kettenschlösser sind von außen leicht zugänglich und daher mit geeignetem Werkzeug leicht zu beseitigen bzw. außer Funktion zu setzen. Die neue Sicherungseinrichtung soll schwer zugänglich sowie einfach und robust in Aufbau und Wirkungsweise sein und damit eine erhöhte Sicherheit bieten.

Vorzugsweise im Sitzrohr des Fahrradrahmens wird nahe der mit einer wulstförmigen Verdickung (15) verstärkten und mit Vertiefungen (3) versehenen Tretlagerwelle (2) eine Führungshülse befestigt, die ein über den Schließzylinder eines Zylinderschlosses (9) betätigbares Verstellglied aufweist, dessen Verdrehung durch Schließen des Schlosses einen in der Führungshülse axial verschieblich angeordneten Verriegelungsbolzen (6) unter Federvorspannung in Richtung Tretlagerwelle (2) versetzt und in eine diesem gegenüberliegende Vertiefung der Tretlagerwelle hineindrückt.

Die Sicherungseinrichtung eignet sich für Damen- und Herrenfahrräder der gebräuchlichen Arten und Größen.

## Beschreibung

Die Erfindung bezieht sich auf eine Sicherungseinrichtung für Fahrräder gemäß dem Oberbegriff des Anspruchs 1.

Seit alters her ist es bekannt und üblich, Fahrräder gegen Diebstahl und unbefugte Benutzung mittels an der Hinterradgabel angeschraubter Druckschlösser zu sichern, bei denen in offenem Zustand der Schlüssel im Schloß festgehalten ist und erst dann entfernt werden kann, wenn der zum Verriegeln vorgesehene Sperriegel zwischen die Speichen des Hinterrades eingedrückt wird. Da diese Druckschlösser leicht abgeschraubt oder auf andere Weise, gegebenenfalls gewaltsam, entfernt werden können, bieten sie nur eine sehr geringe Sicherheit.

Im Hinblick auf die in jüngster Zeit stark zunehmende Anzahl von am Straßenverkehr beteiligten und auch zur sportlichen Betätigung benutzten Fahrrädern und der damit einhergehenden zunehmenden Anzahl von Fahrraddiebstählen, ist es ein dringendes Bedürfnis, die Sicherheit von Fahrrädern gegen unbefugtes Benutzen, insbesondere aber gegen Diebstahl zu erhöhen. Anstelle und/oder zusätzlich zu den herkömmlichen Druckschlössern hat daher die Verwendung von Sicherheits-, Bügel-, Schwenkbügel-, Stahlkabel- und Kettenschlössern, wie sie beispielsweise in den DE-OSen 28 48 390, 31 15 534, 32 03 509, 32 06 709, 32 12 281, 33 08 977 und 33 20 310 beschrieben sind, weite Verbreitung gefunden.

Mit Schlössern dieser Art kann der schnelle Zugriff von Dieben zwar erschwert werden, eine ausreichende Sicherung gegen Diebstahl bieten jedoch auch sie nicht. Dies vor allem deshalb, weil sie von außen im wesentlichen frei zugänglich sind und daher mit geeigneten Werkzeugen leicht entfernt werden können bzw. ihre Schließwirkung aufgehoben werden kann. So können beispielsweise selbst verhältnismäßig stabile Bügel-, Stahlkabel- und Kettenschlösser mittels eines Bolzenschneiders weitgehend problemlos beseitigt werden.

Durch die DE-OS 32 11 704 wurde auch schon eine Lösung bekannt, bei welcher der Schließ- und Verriegelungsmechanismus der Fahrradsicherung in das Tretlager des Fahrrades integriert ist, um das gewaltsame Entfernen der Diebstahlsicherung und den unbefugten Gebrauch eines Fahrrades zumindest zu erschweren. Diese Einrichtung weist zwar eine größere Sicherheit als die oben erwähnten Einrichtungen auf, sie hat andererseits aber eine Reihe von gravierenden Nachteilen.

Als Nachteil erweist sich beispielsweise die Verwendung einer Anzahl von Einzelelementen verhältnismäßig kleiner Abmessungen, was zur Folge hat, daß diese als feinmechanische Teile anzusprechenden Teile sowohl gegen Verschmutzung als auch insbesondere Verschleiß anfällig und damit störungsanfällig sind.

Ein weiterer wesentlicher Nachteil ist darin zu sehen, daß das Tretlager nach einer Seite hin verbreitert ist und damit den ergonomischen Erfordernissen für den Gebrauch eines Fahrrades nicht gerecht wird. Diese einseitige Verbreiterung des Tretlagers führt notgedrungen zu einer ungleichmäßigen Muskelbelastung, was insbesondere bei längeren Fahrten sowie bei Fahrten in mehr oder weniger stark hügeligem bzw. bergigem Gelände sehr ins Gewicht fällt. Selbst wenn man diese einseitige Ausbildung des Tretlagers dadurch ausgleichen würde, daß dieses bzw. die Tretlagerwelle auch an der anderen Seite in entsprechendem Maße verbreitert bzw. verlängert würde, ergäbe sich neben dem Nachteil eines zusätzlichen Aufwandes an Material der Nachteil eines unverhältnismäßig großen Breitenabstandes zwischen den beiden Pedalen, was in ergometrischer Hinsicht unvorteilhaft wäre. Schließlich stellt bei dieser Einrichtung der in entriegeltem Zustand bis zu etwa 5 cm aus der Rahmenkonstruktion hervorstehende Schließzylinder eine erhebliche Unfallgefährdung dar, da der Fahrer bzw. die Fahrerin mit Teilen von Kleidungsstücken, beispielsweise mit einem Hosenbein, daran hängenbleiben und stürzen kann.

Entsprechendes gilt auch für die aus der FR-PS 344 996 bekannte Lösung, bei der die Tretlagerwelle neben dem Rohrrahmen des Fahrrades mit einer wulstförmigen Verdickung und im Bereich dieser Verdickung mit an zwei einander genau gegenüberliegenden Stellen mit Vertiefungen für den Eingriff eines in einem Gehäuse untergebrachten Sperrstiftes versehen ist.

Es ist verhältnismäßig einfach, entweder das komplette Gehäuse mit den in diesem befindlichen Einzelteilen oder aber von diesem Gehäuse den Deckel zu entfernen und dann aus dem Gehäuse die Einzelteile zu entnehmen und damit die Verriegelung aufzuheben, ohne daß dadurch der Gebrauch des Fahrrades in irgendeiner Weise beeinträchtigt wird, womit die Sicherungseinrichtung ihren gedachten und beabsichtigten Zweck dann aber nicht erfüllt.

Um das gewaltsame Entfernen der Diebstahlsicherung und den anschließenden Gebrauch des Fahrrades unmöglich zu machen bzw. mindestens so zu erschweren, daß dies ohne Beschädigung des Fahrrades nicht möglich ist, ist bei der DE-OS 35 41 169 vorgesehen, den Schließ- und Verriegelungsmechanismus in den Rahmen des Fahrrades einzubauen. Damit sind die ergonomischen Nachteile bzw. die Unfallgefährdung durch den hervorstehenden Schließzylinder der DE-OS 32 11 704 zwar vermieden, jedoch kann auch diese Lösung aus verschiedenen Gründen nicht zufriedenstellen. Diese zeichnet sich insbesondere dadurch aus, daß eine Vielzahl von lose miteinander verbundenen Einzelteilen vorgesehen ist, die eine in Herstellung und Montage aufwendige sowie in ihrer Wirkungsweise leicht störanfällige Mechanik darstellen. Die für den Eingriff des Verriegelungsgestänges in der Tretachse vorgesehene Bohrung stellt eine wesentliche Schwächung der Tretachse dar, die insbesondere bei größerem Kraftaufwand, etwa bei einer Bergfahrt, zu einer Verwindung oder gar einem Bruch der Tretachse führen kann und so u.U. nicht nur den Schließmechanismus sondern das ganze Fahrrad funktionsuntüchtig werden läßt.

Des weiteren kann bei dieser bekannten Einrichtung bei entsprechendem Kraftaufwand infolge der im Bereich der Bohrung am Umfang der Tretlagerachse auftretenden Scherkräfte die verhältnismäßig dünne Verriegelungsstange abgeschert und damit der Verriegelungsmechanismus außer Funktion gesetzt werden. Darüberhinaus können aufgrund des relativ großen Abstandes zwischen der Führung der Verriegelungsstange und der Tretachse auf die Verriegelungsstange erhebliche Kräfte einwirken, die zum Verbiegen oder gar Brechen der Verriegelungsstange führen können.

Zu den DE-OSen 32 11 704 und 35 41 169 ist festzustellen, daß beide Lösungen, soweit erkennbar, ohne Vorspannung des bzw. der Verriegelungselemente arbeiten und dementsprechend kein benutzerfreundliches Verschließen ermöglichen. Um die Schließstellung zu erreichen, muß nämlich bei beiden Einrichtungen die Tretkurbel bzw. Tretachse zunächst umständlich in eine solche Position gebracht werden, in welcher die für den Eingriff des Verriegelungselementes in der Tretlagerachse vorgesehene Bohrung, Vertiefung, Einkerbung oder dergleichen dem Verriegelungselement sehr genau gegenübersteht, weil letzteres nur dann durch den Schließvorgang in Eingriff gebracht und damit verriegelt werden kann.

Aus dem DE-GM 90 15 395 ist es auch bekannt, im Fahrradrahmen eine Führungshülse zu befestigen, an deren oberem Ende ein Zylinderschloß angeordnet ist, dessen Schließzylinder mittels eines durch in dem Fahrradrahmen und der Führungshülse ausgebildete Öffnungen hindurch einführbaren Schlüssels um eine zur Achse der Führungshülse senkrechte Achse verdrehbar ist und der Schließzylinder ein Verstellglied aufweist, das mit einem in der Führungshülse axial verschieblich angeordneten, in Vertiefungen der Tretlagerwelle einführbaren Verriegelungsbolzen verbunden ist.

Bei dieser Einrichtung ist ein Einführen des Verriegelungsbolzens in die Vertiefungen der Tretachse ebenfalls nur möglich, wenn diese sich genau gegenüberstehen. Auch hier muß somit die Tretkurbel meist solange hin- und herbewegt werden, bis eine entsprechende Position erreicht ist. Wesentlich gravierender ist jedoch der Nachteil, daß in verriegeltem Zustand die Tretachse an einem verhältnismäßig langen Hebelarm des Verriegelungsstiftes angreift und daher die Gefahr besteht, daß er sich bei entsprechender Kraftübertragung durch entsprechend kraftvolle Betätigung der Tretkurbel zwecks Aufbruchs der Verriegelung verbiegt oder gar bricht, zumal die Führung des Verriegelungsstiftes in der Führungshülse eine nur geringe Stabilität besitzt. Schließlich ist es bei dieser bekannten Einrichtung auch nicht möglich, ein handelsübliches bekanntes Zylinderschloß zu verwenden, sondern nur ein mit zusätzlichem Aufwand verbundenes speziell für den beabsichtigten Verwendungszweck ausgebildetes und hergestelltes Zylinderschloß.

Aus der US-PS 20 55 149 ist schließlich eine im Fahrradrahmen untergebrachte Verriegelungseinrichtung bekannt, bei der die tretlagerseitige Verriegelung dadurch erfolgt, daß eine über ein Zahnrad betätigte und im Bereich des Zahnrades mit einer Verzahnung versehene Stange sich in Sperrstellung vor den einen von zwei einander genau gegenüberliegend an der Tretachse ausgebildeten vorstehenden Nocken setzt. Dabei besteht in Sperrstellung aber die Möglichkeit, die Tretachse um nahezu 180° hin- und herzubewegen, so daß über die Tretkurbel bei entsprechendem Kraftaufwand verhältnismäßig große Scher- und Hebelkräfte übertragen werden können, die infolge Fehlens einer ausreichend stabilen Führung der Sperrstange zu deren Verbiegen und/oder zum Abbrechen des Nockens führen kann, womit dann die Funktion der Sperreinrichtung zumindest in Frage gestellt wäre.

Schließlich ist auch zu dieser bekannten Einrichtung festzustellen, daß es sich hier um eine verhältnismäßig einfach zu entfernende, weil von außen leicht zugängliche, Sperreinrichtung handelt.

Die Erfindung stellt sich die Aufgabe, Fahrräder wirkungsvoller gegen Diebstahl zu schützen mittels eines Verriegelungsmechanismus, der nur mit sehr erheblichem technischem Aufwand zu überwinden ist, der darüberhinaus aber einfach in seinem Aufbau und seiner Bedienbarkeit ist, sowie mechanisch zuverlässig und störungsfrei funktioniert.
Diese Aufgabe wird erfindungsgemäß mit einer Vorrichtung gemäß Anspruch 1 gelöst. Zweckmäßige Ausgestaltungen der Erfindung sind in den Unteransprüchen beschrieben.

Die erfindungsgemäße Ausbildung ermöglicht es, alle Teile der Verriegelungsvorrichtung mit Ausnahme der mit der wulstförmigen Verdickung und den Vertiefungen versehenen Tretlagerwelle zu einer fertig vormontierten Einheit zusammenzufügen und als solche dann gezielt im Rohr des Fahrradrahmens an der dafür vorgesehenen Stelle anzuordnen und zu befestigen, sei es durch Schweißen, Nieten od. dgl. Die Einzelteile der Vorrichtung zeichnen sich durch ihren einfachen Aufbau und ihre verhältnismäßig große Robustheit aus, so daß sie sich in einfacher Weise zusammenbauen lassen und wenig verschleiß- und störanfällig sind. Bei Anordnung der Verriegelungsvorrichtung im Sitzrohr des Fahrradrahmens eignet sie sich insbesondere auch für eine Nachrüstung bei bereits im Gebrauch befindlichen Fahrrädern, wobei die nur kleine erforderliche Öffnung im Rohr des Fahrradrahmens für die erforderliche Einführung des Schlüssels im Falle der Betätigung keine nennenswerte Schwächung des Rahmenrohres zur Folge hat.

Die Erfindung ist in der Zeichnung in Ausführungsbeispielen gezeigt und wird anhand dieser im folgenden erläutert. Es zeigen
- Figur 1: in einem Ausschnitt und teilweise im Schnitt eine Ausführungsform der erfindungsgemäßen Diebstahlsicherung,
- Figur 2: in Ansicht und in einem Axialschnitt bzw. einem Teilschnitt zwei verschiedene Ausführungsformen der Tretachse,
- Figur 3: in Ansicht und im Schnitt bzw. Teilschnitt einige Einzelteile der Diebstahlsicherung der Figur 1,
- Figur 4: in Ansicht bzw. in einem Teilschnitt eine Variante zum Verriegelungsstück der Figur 3,
- Figur 5: in einem Ausschnitt und teilweise im Schnitt eine Variante der Verriegelungsvorrichtung der Figur 1 in etwas größerem Maßstab in Vorder- und Seitenansicht, sowie Draufsicht,
- Figur 6: in einem Ausschnitt und teilweise im Schnitt eine andere Ausführungsform der erfindungsgemäßen Diebstahlsicherung,
- Figur 7: in drei Schnittansichten eine weitere Ausführungsform für die Betätigung der Verriegelungsvorrichtung sowie den Betätigungshebel der Figur 7 in zwei Ansichten,
- Figur 8: im Schnitt und in etwas vergrößertem Maßstab eine weitere Ausführungsform für die Verriegelungsvorrichtung,
- Figur 9: in verschiedenen Schnittansichten weitere Ausführungsformen sowie eine Einzelheit,
- Figur 10: in Vorder- und Seitenansicht sowie teilweise im Schnitt eine weitere Ausbildungsmöglichkeit sowie Einzelteile dazu,
- Figur 11: in gleicher Weise eine andere Ausführungsform,
- Figur 12: in gleicher Weise noch eine weitere Ausführungsform,
- Figur 13: in einem Ausschnitt in Vorder- und Seitenansicht und teilweise im Schnitt und in vergrößertem Maßstab eine Ausführungsform einer äußeren Abdeckung des Rahmenschlüsselloches gegen Feuchtigkeit und Schmutz und
- Figur 14: in entsprechender Weise eine Variante zu Figur 14.

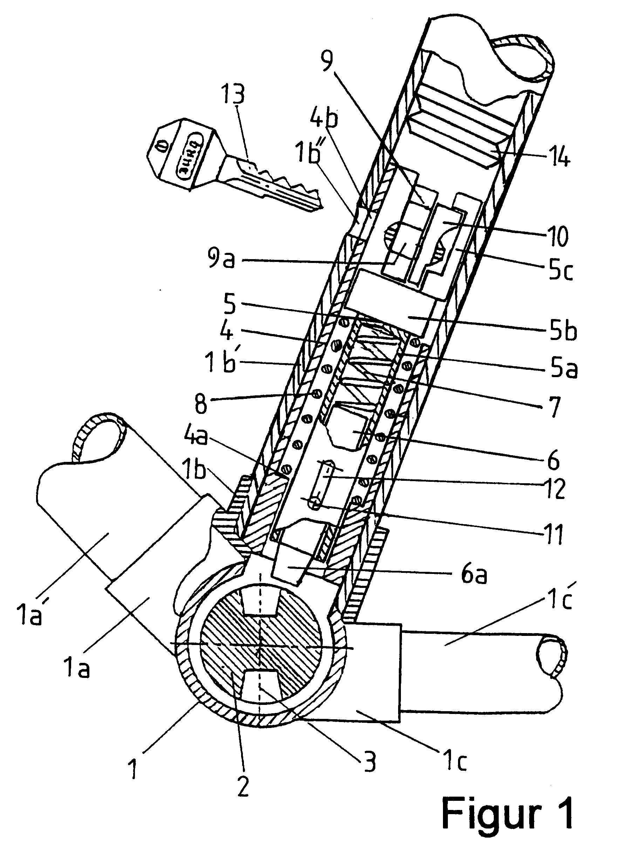

Bei der Ausführungsform der Figur 1 ist das Tretlagergehäuse 1 mit den Abzweigmuffen 1a, 1b und 1c versehen, in welche das Unterrohr 1a', das Sattelstützrohr 1b' und das Hinterradgabelrohr 1c' befestigt, insbesondere eingeschweißt sind. Im Tretlagergehäuse 1 ist die Tretlagerwelle 2 angeordnet und mittels nicht gezeigter Lager, insbesondere Kugellagern, drehbar gelagert. Die Tretlagerwelle 2 ist mit den zwei einander genau diametral gegenüberliegenden Vertiefungen 3 versehen.

Im tretlagerseitigen Ende des Sattelstützrohres 1b' ist die mit Ausnahme der Tretlagerwelle 2 alle Teile der Verriegelungseinrichtung aufnehmende Führungshülse 4 angeordnet und mit dem Sattelstützrohr 1b' fest verbunden, beispielsweise durch Punktschweißen, Nieten oder dergleichen. In der Führungshülse 4 ist axial beweglich das Verriegelungsstück 5 angeordnet, in dessen rohrförmigem Teil 5a sich der axial bewegliche Verriegelungsbolzen 6 befindet. Zwischen dem vom Tretlager abgewandten Ende des Verriegelungsbolzen 6 und dem bundförmigen Teil 5b des Verriegelungsstückes 5 ist die Druckfeder 7 angeordnet. Eine weitere Druckfeder 8 ist zwischen dem bundförmigen Teil 5b des Verriegelungsstückes 5 und dem ringförmigen innenseitigen Absatz 4a der Führungshülse 4 untergebracht. Am oberen Ende des Verriegelungsstückes 5 ist der in Seitenansicht U-profilförmig ausgebildete Flansch 5c ausgebildet, in welchen der mit dem Schließzylinder 9a des an sich bekannten und handelsüblichen Einbau-Zylinderschlosses 9 verbundene Exzenter 10 eingreift.
Das untere Ende des Verriegelungsbolzen 6 ist als Kegelstumpf 6a ausgebildet und in Übereinstimmung damit sind die beiden Vertiefungen 3 der Tretlagerwelle 2 geformt. Im Verriegelungsbolzen 6 ist ferner der Haltestift 11 angebracht, der in dem Schlitz 12 des rohrförmigen Teils 5a des Verriegelungsstückes 5 geführt ist und den Verriegelungsbolzen 6 am Herausfallen aus dem Verriegelungsstück 5 hindert.

Schließlich sind für das Einführen des Schlüssels 13 in die dafür vorgesehene Öffnung des Schließzylinders 9 an entsprechender Stelle des Sattelstützrohres 1b' und der Führungshülse 4 die miteinander fluchtenden Öffnungen 1b'' und 4b ausgebildet. Zum Schutz der gesamten Verriegelungsvorrichtung gegen Feuchtigkeit und Schmutz kann über derselben im Sattelstützrohr 1b' der insbesondere aus Kunststoff oder Gummi hergestellte Stopfen 14 angeordnet, insbesondere festgeklemmt werden, wobei dieser selbstverständlich auch eine andere als die gezeigte Form aufweisen kann.

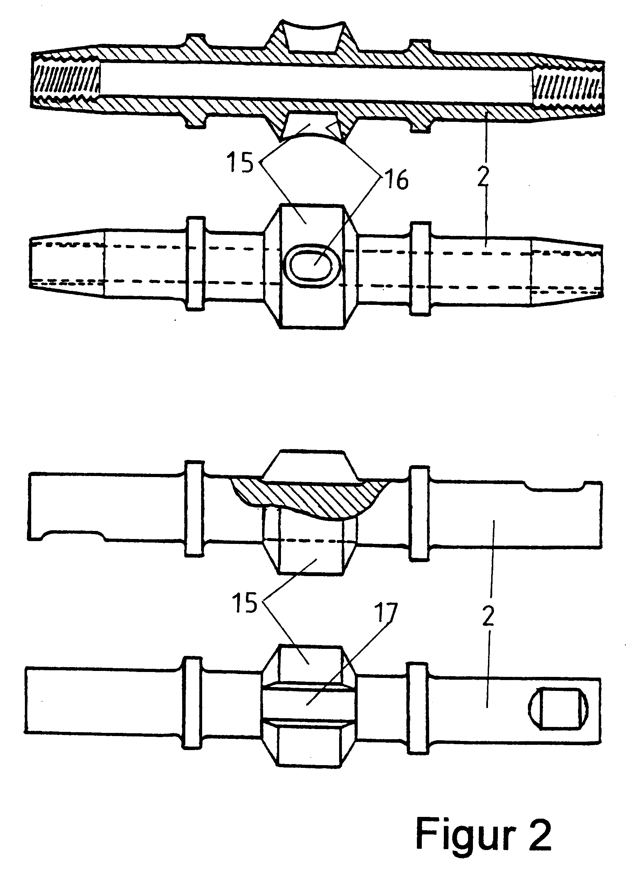

Zwei Ausführungsbeispiele für die Tretlagerwelle 2 zeigt die Figur 2. Sowohl bei der oben gezeigten Tretlagerhohlwelle als auch bei der unten gezeigten Tretlagervollwelle ist in deren Mitte die wulstförmige Verdickung 15 vorgesehen, wobei in der Verdickung in der oberen Tretlagerhohlwelle an zwei einander genau entgegengesetzten Stellen je ein Langloch 16 und in der Verdickung der unteren Tretlagervollwelle in entsprechender Weise axiale Schlitze 17 vorgesehen sind. Selbstverständlich könnten anstelle dessen die Langlöcher 16 und die Schlitze 17 bei jeweils dem anderen Tretlagerwellentyp vorgesehen werden. Beiden Ausführungsformen ist gemeinsam, daß der Außendurchmesser der Tretlagerwelle 2 im Bereich der Langlöcher 16 bzw. Schlitze 17 nicht oder nur unwesentlich geschwächt wird, d. h. der Grund der Langlöcher 16 und Schlitze 17 zumindest angenähert fluchtend mit dem Außendurchmesser des zylindrischen Teils der Tretlagerwellen ist.

In diesem Zusammenhang ist zu erwähnen, daß die Ausführungsform des Langloches 16 den zusätzlichen Vorteil bietet, daß bei verriegelter Vorrichtung ein Ausbau der Tretlagerwelle sicher verhindert wird. Die axiale Erstreckung der Langlöcher wie auch der Schlitze kann mehr oder weniger groß gewählt werden. In aller Regel genügt eine Längserstreckung, die dem natürlicherweise vorhandenen geringen axialen Spiel der Tretlagerwelle 2 Rechnung trägt. Die Bemessung der Langlöcher und Schlitze in Umfangsrichtung der Tretlagerwelle wird zweckmäßig so vorgenommen, daß der Verriegelungsbolzen 6 mit seinem Kegelstumpf 6a in Verriegelungsstellung ohne Spiel in das Langloch bzw. den Schlitz eingreift, wobei durch die konische Ausbildung des in die Vertiefung eingreifenden Teils des Verriegelungsbolzens 6 ein Festsitzen des Konus vermieden und die leichte Entriegelung der Vorrichtung durch entsprechende Betätigung des Schließzylinders 9a mittels des Schlüssels 13 gewährleistet ist.

Anstelle von Langlöchern oder Schlitzen kommen für beide Tretlagerwellentypen bei entsprechender Ausbildung des Verriegelungsbolzens 6 und dessen Führung im Verriegelungsstück 5 bzw. in der Führungshülse 4 auch andere Querschnittsformen für die Vertiefung in der Tretlagerwelle 2 in Betracht, ohne daß dadurch die Funktion beeinträchtigt wird, wobei selbstverständlich dem axialen Spiel der Tretlagerwelle wie auch einem möglichst spielfreien Zusammenwirken zwischen Verriegelungsbolzen und Vertiefung in der Tretlagerwelle in Umfangsrichtung bei Verriegelungsposition wiederum in geeigneter Weise Rechnung zu tragen ist.

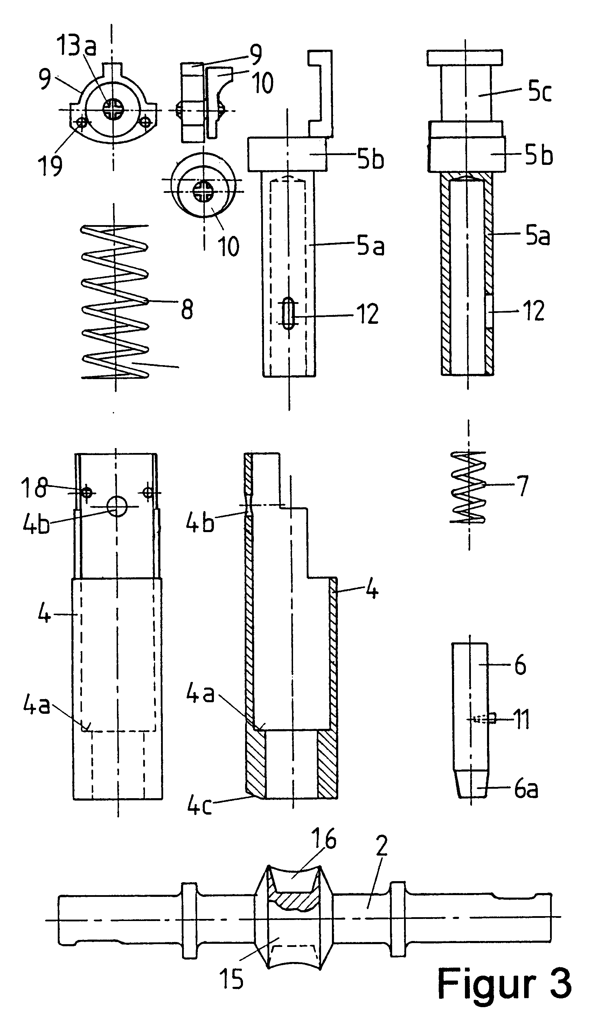

Die Einzelteile der Diebstahlsicherung gemäß Figur 1 zeigt die Figur 3. Die in einer Vorder- und im Schnitt in einer Seitenansicht gezeigte Führungshülse 4 weist den ringbundförmigen Absatz 4a auf, auf dem sich die Druckfeder 8 abstützt. Das obere Ende der Führungshülse 4 ist für die Aufnahme des Einbau-Zylinderschlosses 9 bzw. für die axial verschiebliche Aufnahme des Verriegelungsstückes 5 mit U-profilförmigem Flansch 5c zweifach stufenförmig abgesetzt sowie für die Befestigung des Einbau-Zylinderschlosses 9 mit den Gewindebohrungen 18 und für die Betätigung des Schließzylinders 9a mittels des Schlüssels 13 mit der Bohrung 4b versehen.

Das Einbau-Zylinderschloß 9, bei dem es sich um ein an sich bekanntes und handelsübliches Sicherheitsschloß handelt, weist für die Befestigung an der Führungshülse 4 die beiden Bohrungen 19 sowie auf der dem U-profilförmigen Flansch 5c des Verriegelungsstückes 5 zugewandten Seite den Exzenter 10 auf, der mit dem Schließzylinder 9a fest verbunden ist, so daß bei Betätigung, d.h. Verdrehen des Schließzylinders 9a mittels des Schlüssels 13 in gleicher Weise der Exzenter 10 verdreht wird und dabei entsprechend der Verdrehung des Schließzylinders 9a und des Exzenters 10 über letzteren durch seinen Eingriff in den U-profilförmigen Flansch 5c das Verriegelungsstück 5 axial verschoben wird, und zwar so, daß der Verriegelungsbolzen 6 über die Druckfeder 7 unter gleichzeitiger Spannung der weiteren Druckfeder 8 in Richtung der wulstförmigen Verdickung 15 der Tretlagerwelle 2 hin verschoben wird. Sofern dabei die Tretlagerwelle 2 mit einer ihrer Vertiefungen 3 dem Verriegelungsbolzen 6 genau gegenübersteht, wird der Bolzen 6 mit seinem konischen Ende 6a ohne nennenswerte Spannung der Druckfeder 7 in die Vertiefung 3 hineingedrückt und damit die gewollte Tretlagerverriegelung bewirkt. Andernfalls wird der Verriegelungsbolzen mit seinem konischen Ende 6a unter gleichzeitiger Spannung der Druckfeder 7 gegen die wulstförmige Verdickung 15 der Tretlagerwelle 2 gedrückt und erfolgt eine Verriegelung unter Entspannung der Druckfeder 7 dann, wenn die Tretlagerwelle 2 so weit gedreht wird, bis eine ihrer Vertiefungen 3 dem Ende 6a des Verriegelungsbolzens 6 genau gegenübersteht und der Bolzen 6 nunmehr in die Vertiefung eindringen und die Verriegelung bewirken kann. Zur Erhöhung der Sicherheit empfiehlt es sich, den Verriegelungsbolzen 6 aus einer zähen Stahlsorte herzustellen und eine Oberflächenhärtung durchzuführen.

Alle in Figur 3 gezeigten Einzelteile, mit Ausnahme der Tretlagerwelle 2, werden vor ihrem Einbringen in den Fahrradrahmen zu einer Einheit vormontiert und dann als solche in den Fahrradrahmen eingebracht und in diesem über die Führungshülse 4 durch Schweißen, Hartlöten, Nieten od. dgl. nahe dem Tretlagergehäuse an einer dafür vorgesehenen entsprechenden Stelle befestigt. Um die Montage der einzelnen Teile so einfach wie möglich zu gestalten, sind diese Teile in geeigneter Weise aufeinander abgestimmt. So ist beispielsweise die Breite des U-profilförmigen Flansches 5c des Verriegelungsstückes 5 kleiner bemessen als der Abstand der Gewindelöcher 18 in der Führungshülse 4 bzw. der Bohrungen 19 im Einbau-Zylinderschloß 9, und ferner sind beispielsweise der Exzenter 10 und der Mittelsteg des U-profilförmigen Flansches 5c so ausgebildet, daß das zuletzt stattfindende Anbringen und Festschrauben des Einbau-Zylinderschlosses 9 in der Führungshülse 4 bequem vonstatten gehen kann.

Bei der Montage der Teile wird im einzelnen so verfahren, daß zunächst die Druckfeder 7 und danach der Verriegelungsbolzen 6 in den rohrförmigen Teil 5a des Verriegelungsstückes 5 eingebracht und dann durch den Schlitz 12 hindurch der Haltestift 11 in den Verriegelungsbolzen 6 eingebracht, z.B. eingeschraubt oder eingepreßt wird. Die so geschaffene Baueinheit wird anschließend nach Aufbringen der weiteren Druckfeder 8 auf den rohrförmigen Teil 5a des Verriegelungsstückes 5 bzw. Einbringen in die Führungshülse 4 in letztere eingeführt. Danach wird das Einbau-Zylinderschloß mit Exzenter 10 von der Seite her in die Führungshülse 4 bzw. den U-profilförmigen Flansch 5c eingeführt und seitlich am Mittelsteg des U-profilförmigen Flansches 5c vorbei an der Führungshülse 4 festgeschraubt. Die axial verschiebliche Arretierung des Verriegelungsbolzens 6 im Verriegelungsstück 5 könnte anstelle mit Schlitz 12 und Stift 11 selbstverständlich auch in vielfältiger anderer Art und Weise ausgeführt werden.

Die fertig montierte Verriegelungseinrichtung wird schließlich in den Fahrradrahmen eingebracht, wofür prinzipiell sowohl das Unterrohr 1a', das Sattelstützrohr 1b' und bei Vornahme entsprechender konstruktiver Maßnahmen mit Einschränkungen auch das Hinterradgabelrohr 1c' in Betracht kommen. Bevorzugt kommen jedoch das Unterrohr 1a' und das Sattelstützrohr 1b' in Betracht, und zwar beide gleichermaßen im Falle der Anbringung der Diebstahlsicherung bei der Herstellung des Rades, letzteres auch im Falle einer Nachrüstung eines Fahrrades mit der erfindungsgemäßen Diebstahlsicherung. Im Falle des Einbaues der Diebstahlsicherung bei der Neuherstellung des Fahrrades kann zwecks orientierter Einbringung der Montageeinheit im Sattelstützrohr 1b' vorgesehen sein, am unteren Ende der Führungshülse 4 die Anschrägung 4c auszubilden und den damit korrespondierenden Teil des Tretlagers in entsprechender Weise auszubilden. Das Einbringen der fertig montierten Verriegelungseinrichtung erfolgt jeweils so, daß die Öffnung 4b der Führungshülse 4 mit der Öffnung 1b'' bzw. einer entsprechenden nicht gezeigten Öffnung im Unterrohr 1a' genau fluchtet, woraufhin sie dann im Rahmenrohr fixiert wird.

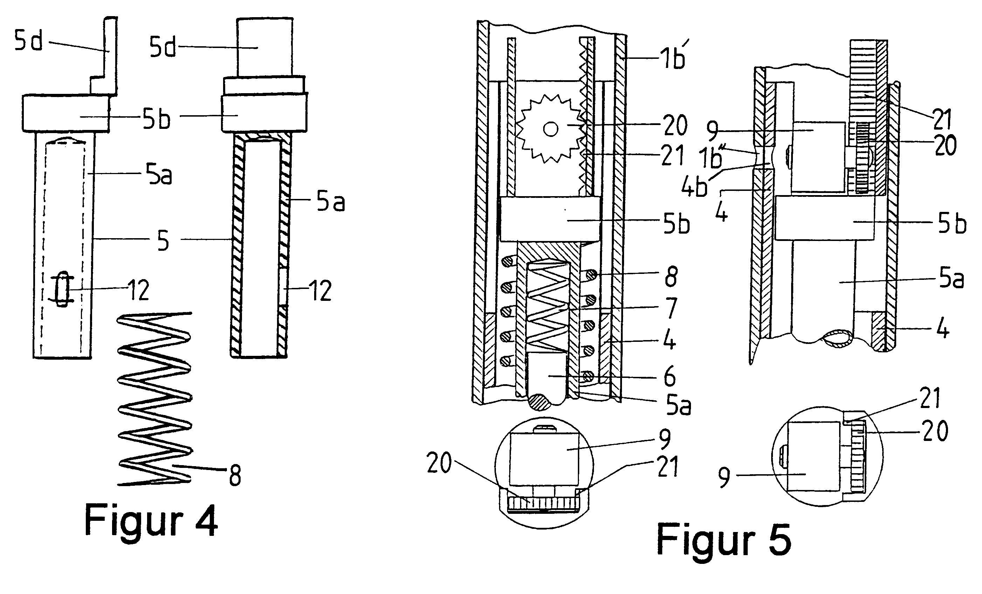

Eine Variante zum Verriegelungsstück 5 der Figuren 1 und 3 zeigt die Figur 4, wobei der Unterschied darin besteht, daß beim Ausführungsbeispiel der Figur 4 anstelle des U-profilförmigen Flansches 5c der Figuren 1 und 3 nur ein rechtwinkliger Flansch 5d vorgesehen ist, d. h. ein Flansch, bei dem der obere Quersteg fehlt. Während beim U-profilförmigen Flansch 5c der Figuren 1 und 3 infolge des Eingriffs des Exzenters 10 in das U-Profil dessen hin- und hergehende Verdrehung durch Betätigung des Schließzylinders 9a mittels des Schlüssels 13 ein axiales Verschieben des Verriegelungsstückes 5 in beiden Richtungen bewirkt und der weiteren Druckfeder 8 somit nur eine geringe Bedeutung im Sinne eines leichteren Lösens der Verriegelung zukommt, erfolgt bei der Ausführungsform der Figur 4 eine axiale Verschiebung des Verriegelungsstückes 5 mit Verriegelungsbolzen 6 beim Verdrehen des Exzenters 10 nur in Verriegelungsrichtung, nicht aber beim entgegengesetzten Verdrehen des Exzenters 10 im Sinne einer Entriegelung der Vorrichtung. Die Aufgabe, die Entriegelung zu bewirken, kommt hier vielmehr ausschließlich der weiteren Druckfeder 8 zu, die im Unterschied zu derjenigen der Figuren 1 und 3 dementsprechend mit einer ausreichend größeren Federkraft ausgebildet wird. In jedem Falle wird die Federkraft der weiteren Druckfeder 8 wie auch diejenige der Druckfeder 7 immer nur so groß bemessen, wie dies zur Erfüllung der vorgesehenen Funktion erforderlich ist.

Von den Ausführungsbeispielen der Figuren 1 bis 4 unterscheidet sich die in Figur 5 gezeigte Lösung dadurch, daß mit dem Schließzylinder des schematisch dargestellten Einbau-Zylinderschlosses 9 anstelle eines Exzenters das Zahnrad 20 verbunden ist und am bundförmigen Teil 5b des Verriegelungsstückes 5 die mit dem Zahnrad 20 zusammenwirkende Zahnstange 21 ausgebildet ist. Ansonsten sind sich die Ausführungsformen der Figuren 1 und 5 hinsichtlich ihrer Ausbildung und insbesondere Wirkungsweise im wesentlichen gleich.

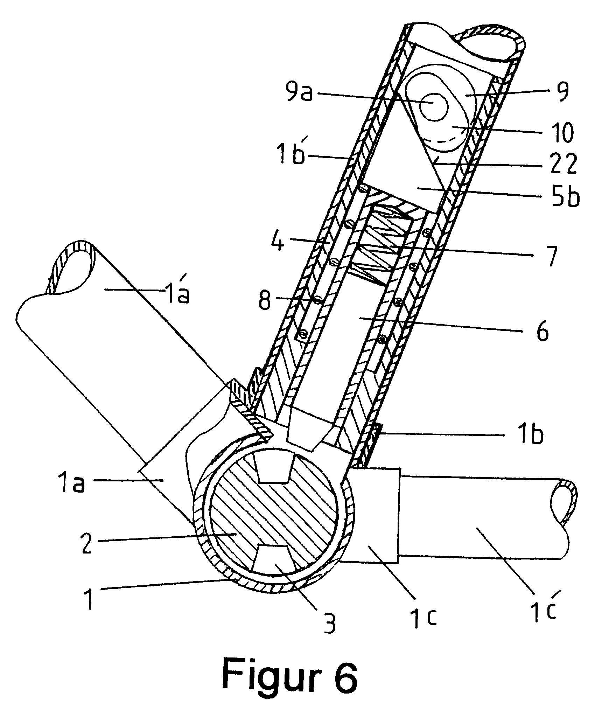

Beim Ausführungsbeispiel der Figur 6 ist der bundförmige Teil 5b des Verriegelungsstückes 5 an seiner Oberseite mit der schiefen Ebene 22 versehen, die mit der mit dem Schließzylinder 9a des Einbau-Zylinderschlosses 9 verbundenen und durch Verdrehen des Schließzylinders 9a mittels eines nicht gezeigten Schlüssels betätigbaren Exzenterscheibe 10 zusammenarbeitet. Diese Ausführungsform entspricht im Prinzip der Ausbildung des Verriegelungsstückes 5 in der in Figur 4 gezeigten Ausführungsform, d. h. das Verriegelungsstück 5 mit Verriegelungsbolzen 6 und Druckfeder 7 wird durch die Verdrehbewegung des Schließzylinders unter Spannung der Druckfeder 7 zwar in axialer Richtung zur Tretlagerwelle 2 hin axial verschoben, jedoch erfolgt bei einer entgegengesetzten Verdrehbewegung des Schließzylinders 9a und damit der Exzenterscheibe 10 im Sinne einer Entriegelung der Diebstahlsicherung nicht zwangsläufig eine entgegensetzt gerichtete axiale Rückstellung von Verriegelungsbolzen 6 und Verriegelungsstück 5, diese wird vielmehr durch die weitere Druckfeder 8 bewirkt, die dementsprechend bemessen sein muß.

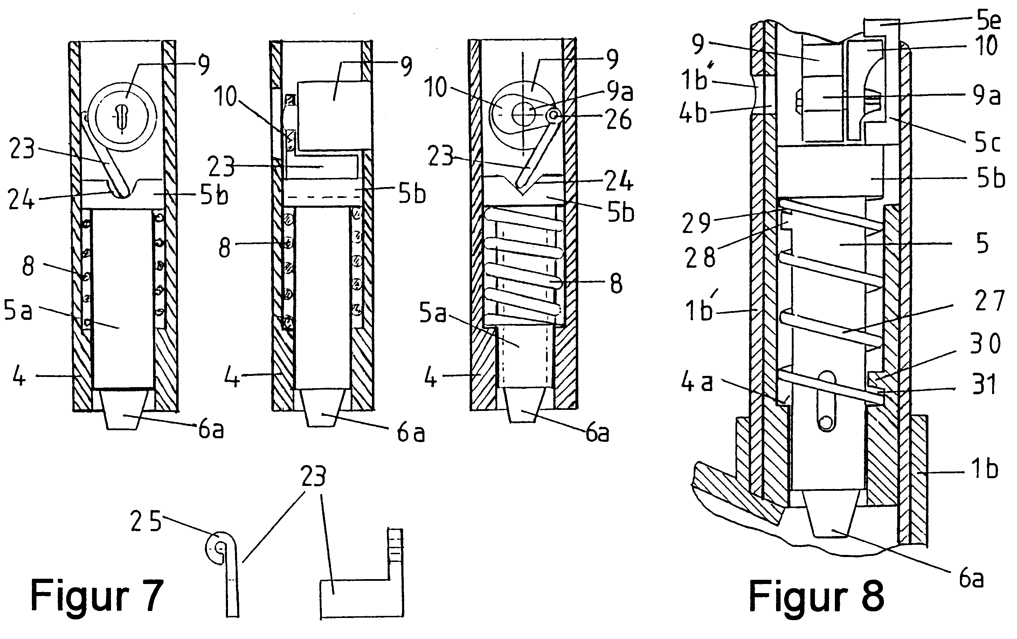

Figur 7 zeigt in verschiedenen Ansichten weitere Beispiele für eine Wirkverbindung zwischen dem Schließzylinder 9a des Einbau-Zylinderschlosses 9 und dem Verriegelungsstück 5 mit im rohrförmigen Teil 5a des Verriegelungsstückes 5 angeordneter nicht gezeigter Druckfeder 7 und mit Verriegelungsbolzen 6. Das Prinzip der Verriegelung erfolgt auch hier in der Weise, daß durch Verdrehen des Schließzylinders 9a des Einbau-Zylinderschlosses 9 der mit ihm verbundene Exzenter 10 mit an diesem drehbeweglich befestigtem Hebel 23 betätigt wird, wodurch er mit seinem unteren Ende in die an der Oberseite des bundförmigen Teils 5b des Verriegelungsstückes 5 ausgebildete Kerbe 24 eingreift und bei Verdrehen des Schließzylinders 9a mit dem Schlüssel das Verriegelungsstück 5 in axialer Richtung zur Tretlagerwelle 2 hin verschiebt, wobei die Druckfeder 7 gespannt wird und den Verriegelungsbolzen 6 in Richtung Tretlagerwelle 2 beaufschlagt, so daß der Verriegelungsbolzen 6 mit seinem Kegelstumpf 6a in eine der Vertiefungen 3 der Tretlagerwelle 2 eingreift, sobald sich diese einander genau gegenüberstehen. Auch hier erfolgt durch entgegengesetzt gerichtete Verdrehung des Schließzylinders und der mit ihm verbundenen Teile nicht zwangsläufig eine Entriegelung, diese wird vielmehr wiederum durch die entsprechend bemessene weitere Druckfeder 8 bewirkt. Wie gezeigt, ist der Hebel 23 als Winkelhebel ausgebildet, wobei er eine Krümmung 25 zum Aufbringen auf den am Exzenter 10 vorgesehenen Stift 26 aufweist.

Das Ausführungsbeispiel der Figur 8 entspricht im wesentlichen demjenigen der Figur 1, jedoch ist anstelle der weiteren Druckfeder 8 in der Führungshülse 4 die Zugfeder 27 angeordnet, die mit ihrem oberen Ende in dem zwischen dem bundförmigen Teil 5b und dem am rohrförmigen Teil 5c des Verriegelungsstückes 5 ausgebildeten Nocken 28 gebildeten Schlitz 29 und mit ihrem unteren Ende in dem zwischen dem innenseitigen Absatz 4a und dem in der Führungshülse 4 ausgebildeten Nocken 30 gebildeten Schlitz 31 festgehalten ist. Die in der gezeigten "Offenstellung" der Verriegelungseinrichtung unter Zugspannung stehende Zugfeder 27 ist bestrebt, das Verriegelungsstück 5 mit Verriegelungsbolzen 6 in Schließrichtung axial zu verschieben, wird daran jedoch durch den unter den oberen Querholm 5e des U-profilförmigen Flansches 5c eingreifenden Exzenter 10 gehindert. Beim Schließen der Diebstahlsicherung durch Verdrehen des Exzenters 10 über den Schließzylinder 9a durch den Schlüssel des Schlosses wird das Verriegelungsstück 5 mit Verriegelungsbolzen 6 in Richtung Tretlagerwelle axial verschoben, wobei die Zugfeder 27 sich in entsprechender Weise entspannt, wenn der Verriegelungsbolzen 6 in eine der Vertiefungen der Tretlagerwelle eingreift und damit die Tretlagerachse verriegelt ist. Ein Aufheben der Verriegelung erfolgt zwangsläufig dann, wenn der Exzenter 10 durch Betätigen des Schließzylinders 9a mittels des Schlüssels in die in der Figur 8 gezeigte Position zurückgeführt wird, wobei gleichzeitig die Zugfeder 27 wieder unter Vorspannung gesetzt wird. Damit wird sichergestellt, daß im Falle des Versuchs durch Unbefugte, das Schloß auszubohren, eine bestehende Verriegelung der Tretachse nicht aufgehoben wird, diese vielmehr nur durch Betätigung des Schließzylinders 9a mittels des dafür vorgesehenen Schlüssels möglich ist.

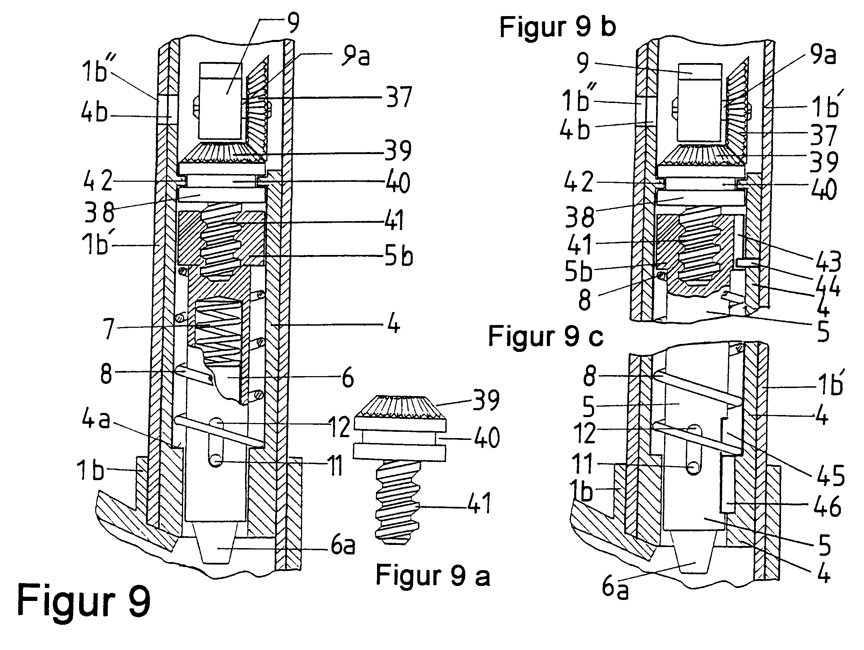

Auch beim Ausführungsbeispiel der Figuren 9, 9a, 9b und 9c handelt es sich um eine Ausführungsform, bei der mit Ausnahme der Tretlagerwelle alle Teile eine geschlossene Baugruppe bilden, die sich sowohl für den nachträglichen Einbau als auch zum Einbau im Rahmen der Produktion eignet und die auf dem gleichen Prinzip beruht, wie die Ausführungsform der Figur 1.

Auf dem Schließzylinder 9a des in geeigneter Weise in der Führungshülse 4 befestigten Einbau-Zylinderschlosses 9 ist hier anstelle eines Exzenters das Kegelzahnrad 37 vertikal angeordnet und befestigt, das mit der Kegelverzahnung 39 des Steuerstückes 38 im Eingriff ist, welches an seinem Umfang die ringförmige Nut 40 und an seiner Unterseite den mit Trapezgewinde versehenen Gewindeteil 41 aufweist, mit welcher das Steuerstück 38 in den mit einem paßgleichen Innengewinde versehenen bundförmigen Teil 5b des Verriegelungsstückes 5 eingreift, wobei anstelle eines Trapezgewindes selbstverständlich auch eine andere Gewindeform vorgesehen werden kann. Das Steuerstück 38 ist in der Führungshülse 4 in Umfangsrichtung verdrehbar, mittels des ringförmigen Vorsprungs 42, anstelle dessen auch beispielsweise ein Sprengring oder eine entsprechende Anzahl von über den Umfang verteilt angeordneten Nasen oder Stiften vorgesehen sein könnte, jedoch gegen axiale Verschiebung gesichert angeordnet.

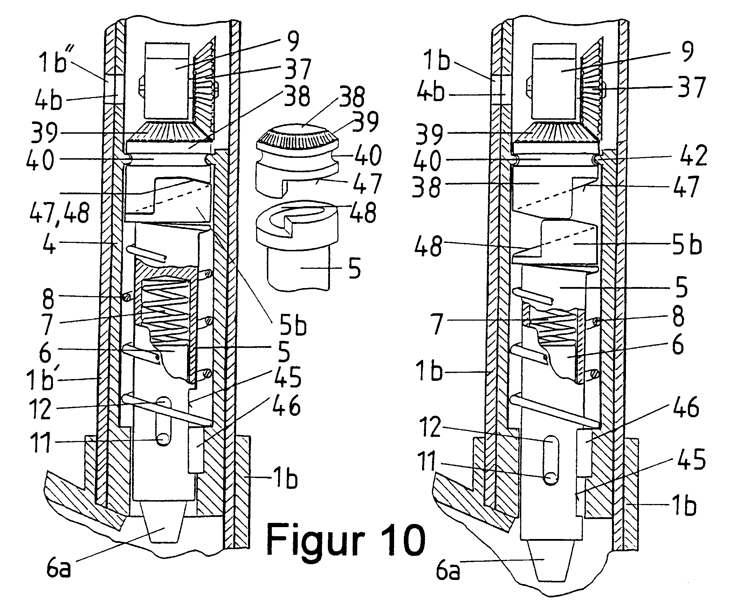

Wird mit dem durch die Öffnungen 1b'' und 4b eingeführten nicht gezeigten Schlüssel der Schließzylinder 9a verdreht, wird in entsprechender Weise auch das vertikale Kegelzahnrad 37 verdreht, das seinerseits über die mit ihm in Eingriff stehende Kegelverzahnung 39 das Steuerstück 38 mit Gewindeteil 41 verdreht. Um zu verhindern, daß sich dabei auch das Verriegelungsstück 5 mitdreht, wodurch eine relative axiale Verschiebung zwischen Steuerstück 38 und Verriegelungsstück 5 verhindert würde, ist das Verriegelungsstück 5 gemäß Figur 10b durch die am Umfang seines bundförmigen Teils 5b ausgebildete Längsnut 43 und den in diese eingreifenden in der Führungshülse 4 fest angebrachten Stift 44, bei dem es sich beispielsweise auch um eine Schraube handeln könnte, und gemäß Figur 10c durch die an der Außenseite des Verriegelungsstückes 5 ausgebildete Fläche 45 und die mit dieser zusammenwirkenden in der Führungshülse 4 fest angeordneten Paßfeder 46 an einer Verdrehung in Umfangsrichtung hindert, ohne daß dabei jedoch die axiale Verschieblichkeit des Verriegelungsstückes 5 beeinträchtigt wird. Durch das Verdrehen des Steuerstückes 38 wird entsprechend der Steigung seines Gewindeteils 41 eine axiale Verschiebung des Verriegelungsstückes 5 in Richtung Tretlager bewirkt, wobei für den Fall, daß keine der Vertiefungen der Tretlagerwelle sich genau gegenüber dem Verriegelungsbolzen 6 befindet, der Kegelstumpf 6a zunächst unter gleichzeitiger Spannung der Druckfeder 7 gegen die wulstförmige Verdickung der Tretlagerwelle stößt und dann bei Weiterdrehen der Tretlagerwelle schließlich unter Entspannung der Druckfeder 7 in eine der Vertiefungen eindringt und somit das Tretlager verriegelt. Entsprechend wird bei umgekehrter Verdrehung des Steuerstückes 38 das Verriegelungsstück in entgegengesetzter Richtung axial verschoben und dabei durch Herausziehen des Verriegelungsbolzens 6 aus der Vertiefung der Tretlagerwelle das Tretlager wieder entriegelt.

Das Ausführungsbeispiel der Figur 10 entspricht im wesentlichen demjenigen der Figur 10, ausgenommen, daß das Steuerstück 38 und der mit diesem zusammenwirkende bundförmige Teil 5b des Verriegelungsstückes 5 anders ausgebildet sind. So weist das Steuerstück 38 an seiner Unterseite anstelle des Gewindeteils die spiralförmige schiefe Ebene 47 und das obere Ende des Verriegelungsstückes 5 die dazu paßgenaue spiralförmige schiefe Ebene 48 als Gegenstück auf, wie insbesondere aus der perspektivischen Darstellung dieser beiden Teile zu ersehen ist. Die Wirkungsweise ergibt sich aus einem Vergleich der linken Figur, die die Einrichtung in geöffnetem Zustand zeigt, und der rechten Figur, die die Einrichtung in Verriegelungsposition zeigt. Zur Verminderung von Gewicht und Reibung kann das Steuerstück 38 axial durchbohrt und das obere Ende des Verriegelungsstückes 5 hohl ausgebildet sein. Ebenso können zur Verminderung von Reibung und der damit verbundenen Schwergängigkeit die Flächen 47 und 48 mit einer Kunststoffbeschichtung versehen werden.

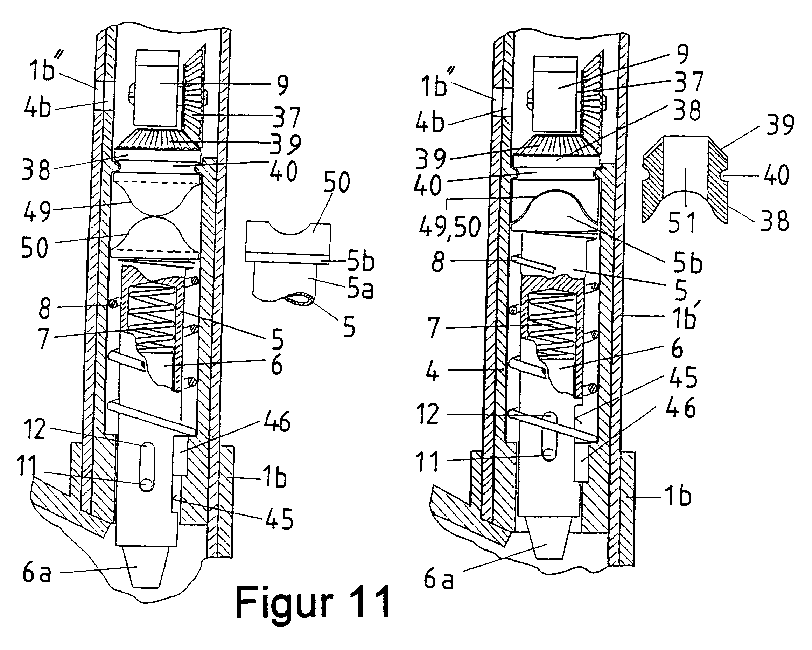

Eine weitere Möglichkeit der Ausbildung des Steuerstückes 38 und des bundförmigen Teiles 5b des Verriegelungsstückes 5 als Gegenstück ist in Figur 11 gezeigt. Dabei sind das Steuerstück 38 an seiner Unterseite und der bundförmige Teil 5b des Verriegelungsstückes 5 an seiner Oberseite als zueinander passende Nocken 49 bzw. 50 ausgebildet. Zur Verdeutlichung ist das Steuerstück 38 in einem Schnitt dargestellt, aus dem sich ersehen läßt, daß es zur Gewichtsreduzierung mit einer durchgehenden zentralen axialen Öffnung 51 versehen ist. Ebenso ist zur Verdeutlichung das nockenförmig ausgebildete obere Ende des Verriegelungsstückes in einem Ausschnitt gezeigt. Schließlich zeigt die Figur 11 links die Verriegelungseinrichtung in Offenstellung und rechts in Verriegelungsposition. Ansonsten stimmt die Ausführungsform gemäß dieser Figur hinsichtlich Betätigung sowie auch Funktion mit den Ausführungsbeispielen gemäß den Figuren 10 und 11 überein. Auch hier können zur Verminderung von Reibung und der damit verbundenen Schwergängigkeit die Flächen 49 und 50 mit einer Kunststoffbeschichtung versehen werden.

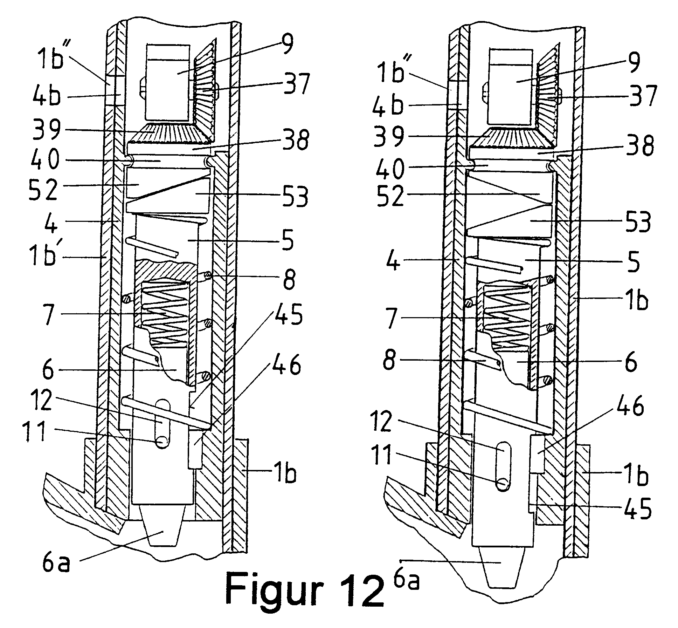

Eine weitere Variante für die Ausbildung des Steuerstückes 38 und des bundförmigen Teiles 5b des Verriegelungsstückes 5 zeigt die Figur 12, und zwar links in Offenstellung und rechts in Verriegelungsposition. Das Steuerstück 38 und der bundförmige Teil 5b sind hierbei mit den schiefen Ebenen 52 bzw. 53 ausgebildet. In bezug auf die Wirkungsweise stimmt diese Ausführungsform mit denjenigen gemäß den Figuren 9, 10 und 11 überein.

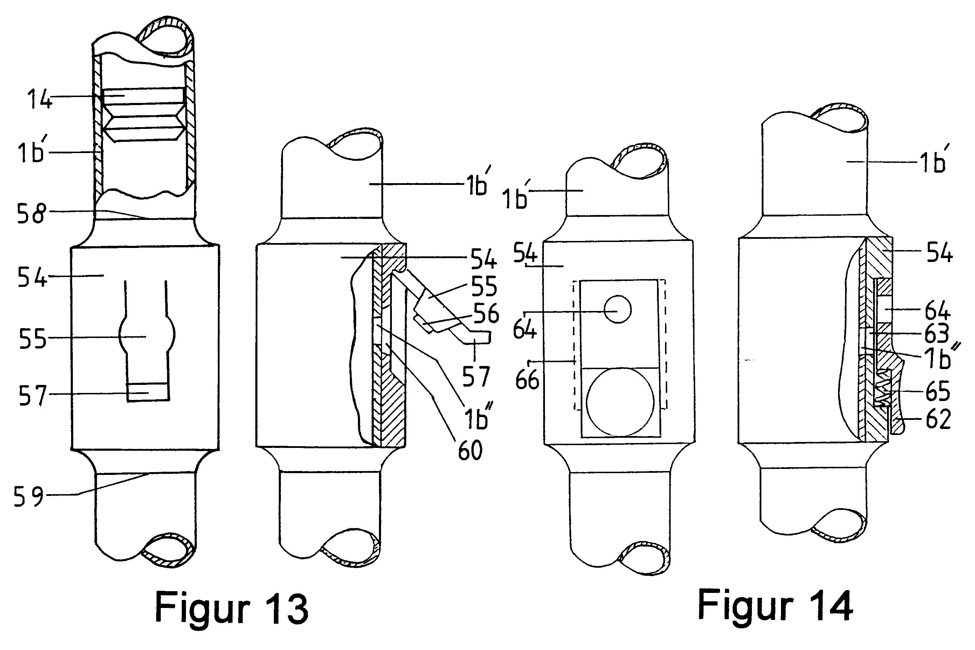

Außer dem in Figur 1 gezeigten Stopfen 14, der selbstverständlich auch bei allen anderen gezeigten Ausführungsformen vorgesehen werden kann, erweist es sich als zweckmäßig, die am Fahrradrahmen, sei es im Sitzrohr 1b' oder im Unterrohr 1a', für die Hindurchführung des Schlüssels vorgesehene Öffnung 1b'' mittels einer Abdeckung gegen Witterungseinflüsse und gegen Verschmutzung zu schützen. Eine mögliche Ausführungsform dafür zeigt die Figur 13, bei welcher im Bereich der Öffnung 1b'' im Sitzrohr 1b' die dieses umgebende Manschette 54 aus Kunststoff vorgesehen ist, die die Klappe 55 mit der genau in die Aussparung 60 der Manschette 54 passenden konischen Verdickung 61 sowie mit dem genau in die Rahmenöffnung 1b'' passenden und eindrückbaren innenseitigen zylindrischen Vorsprung 56 und die Betätigungslasche 57 aufweist. Zum erforderlichen Einführen des Schlüssels wird die Klappe 55 mittels der Lasche 57 angehoben und um ihr eines Ende verschwenkt, bis das Schlüsselloch 1b'' genügend frei ist und der Schlüssel eingeführt werden kann. Nach dem Abziehen des Schlüssels wird die Klappe wieder in ihre Ausgangsposition zurückgedrückt, wobei sich der Vorsprung 56 in das Schlüsselloch 1b'' eindrückt und die Klappe in ihrer Schließposition festhält. Unter Umständen erweist es sich dabei als vorteilhaft, die Manschette 54 zumindest längs ihres oberen und unteren Randes 58 bzw. 59 mit dem Rahmen zu verkleben, um die Manschette 54 mit ihrer Aussparung 60 in bezug auf das Schlüsselloch 1b'' an der richtigen Stelle zu fixieren und um zu verhindern, daß zwischen Rahmen 1b' und Manschette 54 Feuchtigkeit oder Schmutz eindringen kann. Ebenso kann in vorteilhafter Weise auch vorgesehen werden, die Manschette 54 in einer Signalfarbe auszuführen, um einen optischen Hinweis auf eine zusätzliche Sicherung zu geben und damit eine psychologische Abschrekkungswirkung zu erzielen.

Anstelle einer Klappe ist bei der weiteren Ausführungsform der Manschette 54 gemäß Figur 14 der Schieber 62 vorgesehen. Die Manschette 54 weist die mit dem Schlüsselloch 1b'' genau fluchtende Bohrung 63 auf und ebenso weist der Schieber 62 die gleich große Bohrung 64 auf. Der Schieber 62 ist mittels schwalbenschwanzförmigen seitlichen Hinterschneidungen 66 in der Manschette 54 gegen Herausfallen geführt und gesichert und wird mittels der Druckfeder 65 in Verschlußposition gehalten, in welcher das Schlüsselloch 1b'' und die Manschettenbohrung 63 durch den Schieber 62 abgedeckt, d. h. verschlossen sind. Zum Einführen des Schlüssels im Bedarfsfall wird der Schieber 62 gegen den Druck der Feder 65 so weit verschoben, bis die Schieberbohrung 64 mit dem Schlüsselloch 1b'' und der Manschettenbohrung 63 deckungsgleich ist, so daß nunmehr der Schlüssel eingeführt werden kann. Nach dem Abziehen des Schlüssels kehrt der Schieber 62 unter dem Druck der Feder 65 wieder in seine vorherige Verschlußposition zurück.

Zweckmäßig ist es grundsätzlich bei allen Ausführungsformen der erfindungsgemäßen Diebstahlsicherung, die Vertiefungen in der Tretlagerwelle so vorzusehen, daß im Falle einer Verriegelung eine vertikale Tretkurbelstellung erreicht wird, wodurch auf die Tretkurbel bei normaler Position des Fahrrades nur eine relativ geringe Kraft aufgebracht werden kann.

Bei allen gezeigten Ausführungsformen, bei denen durch Betätigung des Schließzylinders 9a mittels des Schlüssels 13 in der einen oder der anderen Richtung über das Verstellglied zwangsläufig auch eine axiale Verschiebung des Verriegelungsstückes 5 in der einen bzw. anderen Richtung bewirkt wird, kann anstelle der Druckfeder 8 eine Zugfeder 27 vorgesehen werden, um ein unbefugtes Aufheben der Verriegelung zu erschweren bzw. unmöglich zu machen.

Bei allen in den Ausführungsbeispielen gezeigten sowie im Rahmen der Erfindung liegenden weiteren vorstellbaren Ausführungsmöglichkeiten sind die Verdrehung des Verstellgliedes und des Steuerstückes einerseits und der axiale Verschiebungsweg des Verriegelungsstückes bzw. Verriegelungsbolzens andererseits aufeinander abgestimmt, wobei die zur Erzielung der einwandfreien Verriegelung erforderliche axiale Verschiebung von Fall zu Fall durch eine mehr oder weniger große Verdrehung von beispielsweise 90, 180 oder auch 360° erreicht werden kann, wofür dann selbstverständlich ein entsprechendes und geeignetes Einbau-Sicherheits-Zylinderschloß Verwendung findet.

Die Anordnung des Einbau-Sicherheits-Zylinderschlosses erfolgt zweckmäßig so, daß der Schlüssel zu seiner Betätigung in der Ebene des Fahrradrahmens entgegen der Fahrtrichtung eingeführt werden muß. Dadurch wird verhindert, daß im Falle des "versehentlichen Steckenlassens" des Schlüssels der Benutzer des Fahrrades mit seiner Kleidung am Schlüssel hängenbleibt und dabei in Gefahr gerät. Diese Gefahr besteht natürlich dann nicht, wenn etwa durch einen Federausdrücker, insbesondere einen solchen am Schlüssel, dafür gesorgt wird, daß der Schlüssel auf keinen Fall im Schloß steckenbleibt. In diesem Fall ist ein seitliches Einführen des Schlüssels unbedenklich.

Die erfindungsgemäße Diebstahlsicherung kann auch in Verbindung mit einer zusätzlichen bekannten Ketten-, Kabel-, Bügelsicherung oder dergleichen angewendet werden, wobei sich im Falle eines versuchten Diebstahls der überraschende Effekt ergeben kann, daß ein potentieller Dieb nach dem Aufbruch dieses bekannten äußeren und gut sichtbaren Schlosses feststellen muß, daß das Fahrradtretlager blockiert ist und er mit dem Fahrrad nicht fortfahren kann. Ebenso könnte die erfindungsgemäße Diebstahlsicherung anstelle dessen oder zusätzlich auch in Verbindung mit optischen und/oder akustischen Diebstahlsicherungen angewendet werden.

## Patentansprüche

1. Sicherungseinrichtung für Fahrräder gegen Diebstahl und unbefugte Benutzung, mit einer im Fahrradrohrrahmen angeordneten und mittels eines Einbau-Sicherheits-Zylinderschlosses betätigbaren, mittels eines im zur Tretachse gerichteten Rahmenrohr in einer nahe dem Tretlagergehäuse angeordneten und befestigten Führungshülse untergebrachten und in Richtung der Rohrachse verschieblich angeordneten, im Schließzustand mit seinem einen Ende in eine Vertiefung der Tretachse eingreifenden Verriegelungsbolzens die Tretachse blockierenden Verriegelungsvorrichtung, gekennzeichnet durch die Kombination folgender Merkmale
- die Tretachse ist im Bereich des Rohrrahmens, vorzugsweise genau mittig, mit einer an sich bekannten wulstförmigen Verdickung (15) sowie im Bereich dieser Verdickung an zwei einander genau gegenüberliegenden Stellen mit Vertiefungen (3) für die Aufnahme des Verriegelungsbolzens (6) versehen,
- der Verriegelungsbolzen (6) ist unter Zwischenschaltung einer in Öffnungsstellung des Zylinderschlosses (9) spannungslosen Druckfeder (7) in einer nach der Tretachse (2) zu offenen hülsenförmigen Verlängerung (5a) eines Verriegelungsstückes (5) über diese vorstehend begrenzt axial verschieblich angeordnet,
- das Verriegelungsstück (5) ist mit seinem einen Endbereich mittels einer ringbundförmigen Verdickung (5b) und mit seinem anderen Endbereich mittels der hülsenförmigen Verlängerung (5a) in einer ringbundförmigen Verengung (4a) der Führungshülse (4) unter Zwischenschaltung einer zwischen der Verdickung (5b) und der Verengung (4a) angeordneten und die hülsenförmige Verlängerung (5a) umgebenden Druckfeder (8) in der Führungshülse (4) bis über deren tretlagerseitiges Ende hinaus dicht an die wulstförmige Verdickung (15) der Tretachse (2) heranreichend begrenzt axial verschieblich geführt angeordnet,
- das Einbau-Sicherheits-Zylinderschloß (9) ist am oberen Ende der Führungshülse (4) in dieser befestigt und an seinem Schließzylinder (9a) mit einem mit dem Verriegelungsstück (5) in Wirkverbindung stehenden und durch Verdrehen des Schließzylinders mittels des Schlüssels (13) des Zylinderschlosses (9) betätigbaren Verstellglied versehen.

2. Sicherungseinrichtung nach Anspruch 1, dadurch gekennzeichnet, daß das Verstellglied als Exzenterscheibe (10) und der mit dieser korrespondierende Teil des Verriegelungsstückes (5) als U-profilförmiger Flansch (5c) ausgebildet sind.

3. Sicherungseinrichtung nach Anspruch 1, dadurch gekennzeichnet, daß das Verstellglied als Zahnrad (20) und der mit diesem korrespondierende Teil des Verriegelungsstückes (5) als Zahnung (21) ausgebildet sind.

4. Sicherungseinrichtung nach Anspruch 1, dadurch gekennzeichnet, daß das Verstellglied als Kegelzahnrad (37) und der mit diesem korrespondierende Teil des Verriegelungsstückes (5) als in dessen Mittelstück (5b) mit einem Gewindeteil (41) eingreifendes und mit einer mit dem Kegelzahnrad (37) in Eingriff stehenden Kegelverzahnung (39) versehenes Steuerstück (38) ausgebildet sind.

5. Sicherungseinrichtung nach Anspruch 1, dadurch gekennzeichnet, daß das Verstellglied als Kegelzahnrad (37) und der mit diesem korrespondierende Teil des Verriegelungsstückes (5) als mit einer an dessen Mittelstück (5b) ausgebildeten schiefen Ebene (48) mit einer schiefen Ebene (47) zusammenwirkendes und mit einer mit dem Kegelzahnrad (37) in Eingriff stehenden Kegelverzahnung (39) versehenes Steuerstück (38) ausgebildet ist.

6. Sicherungseinrichtung nach Anspruch 1, dadurch gekennzeichnet, daß das Verstellglied als Kegelzahnrad (37) und der mit diesem korrespondierende Teil des Verriegelungsstückes (5) als mit einem in dessen Mittelstück (5b) ausgebildetem Nocken (50) mit einem Nocken (49) zusammenwirkendes und mit einer mit dem Kegelzahnrad (37) in Eingriff stehenden Kegelverzahnung (39) versehenes Steuerstück (38) ausgebildet sind.

7. Sicherungseinrichtung nach Anspruch 1, dadurch gekennzeichnet, daß das Verstellglied als Exzenterscheibe (10) und der mit diesem korrespondierende Teil des Verriegelungsstückes (5) als mit ihm gelenkig verbundener und in eine Vertiefung (24) des Mittelstückes (5b) des Verriegelungsstückes (5) eingreifenden Winkelhebel (23) ausgebildet sind.

8. Sicherungseinrichtung nach Anspruch 1, dadurch gekennzeichnet, daß das Verstellglied als Exzenterscheibe (10) und der mit dieser korrespondierende Teil des Verriegelungsstückes (5) als schiefe Ebene ausgebildet sind.

9. Sicherungseinrichtung nach einem der Ansprüche 1 bis 8, dadurch gekennzeichnet, daß anstelle der Druckfeder (8) eine mit ihrem oberen Ende mit dem rohrförmigen Teil (5a) des Verriegelungsstückes (5) und mit ihrem unteren Ende mit der Führungshülse (4) verbundene Zugfeder (27) ausgebildet ist.

10. Sicherungseinrichtung nach Anspruch 9, dadurch gekennzeichnet, daß die Zugfeder (27) mit ihrem oberen Ende in einen mittels eines Vorsprungs (28) außenseitig am Verriegelungsstück (5) gebildeten Schlitz (29) und mit ihrem unteren Ende in einen mittels eines Vorsprungs (30) innenseitig an der Führungshülse (4) gebildeten Schlitz (31) eingreift.

11. Sicherungseinrichtung nach einem der Ansprüche 1 bis 10, dadurch gekennzeichnet, daß sie im Sitzrohr (1b) des Fahrradrahmens untergebracht ist.

12. Sicherungseinrichtung nach einem der Ansprüche 1 bis 11, dadurch gekennzeichnet, daß das tretlagerseitige Ende des Verriegelungsbolzens (6) als Kegelstumpf (6a) und die Vertiefungen (3) in der Tretachse (2) als entsprechende kegelig bzw. konisch sich verjüngende Vertiefungen ausgebildet sind.

13. Sicherungseinrichtung nach einem der Ansprüche 1 bis 12, dadurch gekennzeichnet, daß oberhalb der Führungshülse (4) ein Abdichtungsstopfen (14) angeordnet ist.

14. Sicherungseinrichtung nach einem der Ansprüche 1 bis 13, dadurch gekennzeichnet, daß im Bereich des Schlüsselloches (1'') und der Öffnung (4b) im Rahmenrohr eine außenseitige Abdichtungsmanschette (54) angeordnet ist.

15. Sicherungseinrichtung nach Anspruch 14, dadurch gekennzeichnet, daß die Manschette (54) mit einer mit dem Schlüsselloch (1'') übereinstimmenden Öffnung (60) und einer diese verschließenden schwenkbaren Klappe (55) mit Vorsprung (56) und Betätigungslasche (58) versehen ist.

16. Sicherungseinrichtung nach Anspruch 14, dadurch gekennzeichnet, daß die Manschette (54) mit einer mit dem Schlüsselloch (1'') übereinstimmenden Öffnung (63) und einem mittels einer Hinterschneidung (66) in der Manschette (54) gegen den Druck einer Feder (65) verschiebbar geführten Schieber (62) mit Öffnung (63) versehen ist.

17. Sicherungseinrichtung nach einem der Ansprüche 14 bis 16, dadurch gekennzeichnet, daß die Manschette (54) wenigstens längs ihres oberen Randes (58) und längs ihres unteren Randes (59) mit dem Rohr des Fahrradrahmens verklebt ist.

18. Sicherungseinrichtung nach einem der Ansprüche 1 bis 17, dadurch gekennzeichnet, daß der Verriegelungsbolzen (6) axial verschieblich im rohrförmigen Teil (5a) des Verriegelungsstückes (5) gegen Herausfallen gesichert ist, beispielsweise mittels eines in einem Längsausschnitt (12) des Verriegelungsstückes (5) axial verschieblich geführten Haltestiftes (11).
